(19) Europäisches Patentamt
European Patent Office
Office européen des brevets

(11) **EP 3 838 620 B1**

(12) **EUROPEAN PATENT SPECIFICATION**

(45) Date of publication and mention
of the grant of the patent:
**01.02.2023  Bulletin 2023/05**

(21) Application number: **20212545.6**

(22) Date of filing: **08.12.2020**

(51) International Patent Classification (IPC):
**B60C 9/06** *(2006.01)*      **B60C 13/00** *(2006.01)*
**B60C 11/00** *(2006.01)*      **B60C 1/00** *(2006.01)*

(52) Cooperative Patent Classification (CPC):
**B60C 1/00; B60C 9/06;** B60C 2011/0025;
B60C 2013/006; B60C 2200/10

(54) **MOTORCYCLE TIRE**

MOTORRADREIFEN

PNEUMATIQUE DE MOTOCYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.12.2019  JP 2019227549**

(43) Date of publication of application:
**23.06.2021  Bulletin 2021/25**

(73) Proprietor: **Sumitomo Rubber Industries, Ltd.
Kobe-shi, Hyogo 651-0072 (JP)**

(72) Inventor: **ISAKA, Wataru
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 154 006      WO-A1-2019/244912**

**Description**

BACKGROUND OF THE INVENTION

Field of the Invention

The present invention relates to a motorcycle tire that allows both grip performance and damping performance to be achieved at high levels.

Description of the Background Art

If a motorcycle tire has an insufficient grip performance, the motorcycle may fall down. In view of this, a rubber having a high loss tangent $\tan\delta$ is generally used as a tread rubber for the tire since such a rubber is great in hysteresis friction.

Meanwhile, regarding a tire having a bias structure, the same rubber tends to be used for a tread portion and sidewall portions in a manufacturing method for the tire.

However, if a rubber having a high loss tangent $\tan\delta$ is used for such a tire having a bias structure in favor of grip performance, a problem arises in that the shock absorbing properties (so-called damping performance) of the sidewall portions deteriorate, resulting in impairment of steering operation performance.

International Publication WO 2017/204236 proposes: dividing a tread rubber into a center rubber on the side where a tire equator is present, and shoulder rubbers on both sides of the center rubber; and using, as the center rubber, a rubber having a higher loss tangent $\tan\delta$ than the shoulder rubbers.

This proposal is based on the following reason. Regarding a motorcycle tire, mainly a center rubber contacts the road surface during straight running, and a running time on a wet road surface is longer at the center rubber than at shoulder rubbers. In view of this, the center rubber is particularly required to have wet grip performance as compared to the shoulder rubbers. Meanwhile, the shoulder rubbers contact the ground during cornering. However, since the shoulder rubbers each have a relatively lower loss tangent $\tan\delta$ than the center rubber, damping performance can be exhibited during cornering.

However, with this improvement in the tread rubber, it is difficult to achieve both grip performance and damping performance at high levels, and further studies have been desired. WO 2019/244912 A1 is prior art under Art. 54(3) EPC and concerns heavy duty pneumatic tires. In said heavy duty tire, the sidewall rubber is made of a soft rubber having a complex elastic modulus smaller than that of the tread rubber.

Sidewall rubber compositions for tires in general are described in EP 2 154 006 A1.

SUMMARY OF THE INVENTION

An object of the present invention is to provide a motorcycle tire that allows both grip performance and damping performance to be achieved at high levels.

The present invention is a motorcycle tire in which a carcass extends from a tread portion through sidewall portions to bead portions, and an outer surface of the tread portion extends from a tire equator to tread edges so as to be curved in an arc-shaped manner to protrude radially outwardly.

The motorcycle tire includes: a tread rubber forming the tread portion; and sidewall rubbers forming the sidewall portions and contiguous with the tread rubber with boundary surfaces interposed therebetween.

A loss tangent $\tan\delta S$ at 70°C of each sidewall rubber is lower than a loss tangent $\tan\delta T$ at 70°C of the tread rubber.

It is preferable that, in the motorcycle tire according to the present invention, the carcass has a bias structure.

It is preferable that, in the motorcycle tire according to the present invention, an outer end in a tire axial direction of each boundary surface is located on an outer surface of the corresponding sidewall portion, and a height Ho in a tire radial direction of each outer end from a bead base line and a height HS in the tire radial direction of the corresponding tread edge from the bead base line satisfy the following expression (1).

$$HS > Ho > 0.6 \times HS \ ... \ (1)$$

It is preferable that, in the motorcycle tire according to the present invention, an outer end in a tire axial direction of each boundary surface is located on an outer surface of the corresponding sidewall portion, an inner end in the tire axial direction of the boundary surface is located on the carcass, and a height Ho in a tire radial direction of the outer end from a bead base line and a height Hi in the tire radial direction of the inner end from the bead base line satisfy the following expression (2).

$$Ho > Hi \ldots (2)$$

It is preferable that, in the motorcycle tire according to the present invention, an angle $\alpha$, relative to a line of the tire axial direction, of a straight line passing the inner end and the outer end of the boundary surface is not smaller than 5°.

It is preferable that, in the motorcycle tire according to the present invention, a peak temperature Ts of the loss tangent $\tan\delta$S of the sidewall rubber is lower than a peak temperature Tt of the loss tangent $\tan\delta$T of the tread rubber.

It is preferable that, in the motorcycle tire according to the present invention, a complex elastic modulus $E^*_s$ at 70°C of the sidewall rubber is lower than a complex elastic modulus $E^*_T$ at 70°C of the tread rubber.

It is preferable that, in the motorcycle tire according to the present invention, each of the sidewall rubber and the tread rubber contains an antioxidant, and an amount of the antioxidant blended per 100 parts by weight of a rubber component in the sidewall rubber is larger than an amount of the antioxidant blended per 100 parts by weight of a rubber component in the tread rubber.

In the present specification, the dimension of each part of the tire, and the like, are values that are specified in a normal state where the tire is mounted to a normal rim and inflated to a normal internal pressure.

The "normal rim" refers to a rim that is defined, in a standard system including a standard on which the tire is based, by the standard for each tire. The normal rim is, for example, the "normal rim" in the JATMA standard, the "Design Rim" in the TRA standard, or the "Measuring Rim" in the ETRTO standard. The "normal internal pressure" is an air pressure that is defined, in a standard system including a standard on which the tire is based, by the standard for each tire. The normal internal pressure is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The loss tangent $\tan\delta$ at 70°C and the complex elastic modulus $E^*$ at 70°C are values measured according to the standards of JIS-K 6394 using a "viscoelastic spectrometer" under conditions that the measurement temperature is 70°C, the initial strain is 10%, the amplitude is $\pm1\%$, the frequency is 10 Hz, and the deformation mode is tension.

Regarding the peak temperature of the loss tangent $\tan\delta$, the $\tan\delta$ is measured according to the standards of JIS-K 6394 under conditions that the measurement temperature is - 120 to 80°C, the initial strain is 10%, the amplitude is $\pm1\%$, the frequency is 10 Hz, and the deformation mode is tension, and a peak temperature of the $\tan\delta$ is obtained from the result of the measurement.

In the present invention, the loss tangent $\tan\delta$S at 70°C of the sidewall rubber forming the sidewall portion is set to be lower than the loss tangent $\tan\delta$T at 70°C of the tread rubber as described above.

Ordinarily, the temperature of a tire increases to about 70°C during running. Therefore, the loss tangent $\tan\delta$T of the tread rubber is relatively high during running. Accordingly, excellent grip performance can be exhibited over the entire times of straight running and cornering. Meanwhile, the loss tangent $\tan\delta$S of each sidewall rubber is relatively low during running. Accordingly, a flexibly deforming property and excellent damping performance can be imparted to the sidewall portion without any restriction being imposed owing to the tread rubber, whereby contribution can be made to improvement in ride comfort and steering stability.

Thus, both grip performance and damping performance can be achieved at high levels.

BRIEF DESCRIPTION OF THE DRAWINGS

FIG. 1 is a cross-sectional view of an example of a motorcycle tire according to the present invention;
FIG. 2 is a partially enlarged cross-sectional view of the tire of Fig. 1;
FIG. 3 is a schematic cross-sectional view schematically showing another example of a tread rubber of a motorcycle tire according to the present invention; and
FIG. 4 is a schematic cross-sectional view for explaining a crack formed on a boundary surface in the case of Ho<Hi.

DESCRIPTION OF THE PREFERRED EMBODIMENTS

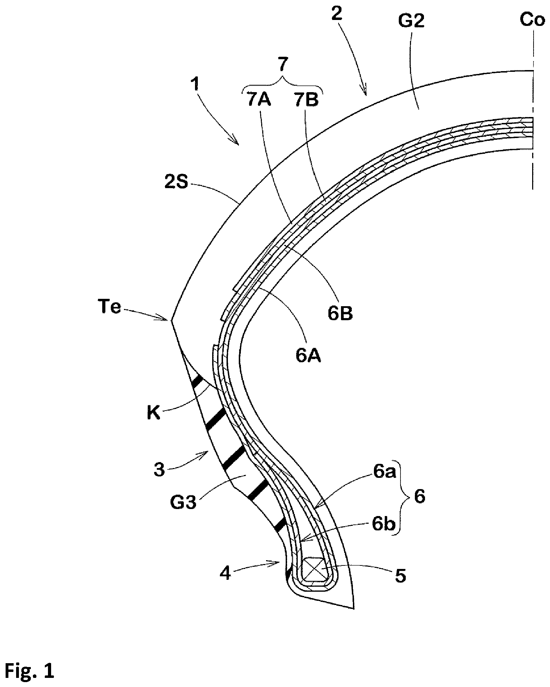

Hereinafter, an embodiment of the present invention will be described in detail. As shown in FIG. 1, a motorcycle tire 1 according to the present embodiment of the invention includes a tread portion 2, a pair of sidewall portions 3 extending from both ends of the tread portion 2 inward in a tire radial direction, and bead portions 4 provided at inner ends of the respective sidewall portions 3 and having bead cores 5 embedded therein.

A tread surface 2s which is the outer surface of the tread portion 2 extends from a tire equator Co to tread edges Te so as to be curved in an arc-shaped manner to protrude outwardly in the tire radial direction. A tread width which is the width along a straight line of a tire axial direction between the tread edges Te and Te is the maximum width of the tire. Accordingly, a cornering performance, unique to motorcycle tires, of cornering at a large camber angle is imparted.

The motorcycle tire 1 includes a carcass 6 extending from the tread portion 2 through the sidewall portions 3 to the bead portions 4. In the present example of a motorcycle tire according to the present invention, a case is described where a breaker layer 7 is disposed, inside the tread portion 2, on the outer side in the tire radial direction of the carcass 6.

The carcass 6 includes a body portion 6a extending on and between the bead cores 5 and 5, and turned-up portions 6b contiguous with the body portion 6a and turned up around the bead cores 5.

The carcass 6 in the present example of a motorcycle tire according to the present invention has a bias structure. Specifically, the carcass 6 is formed by a plurality of carcass plies in which carcass cords are arranged so as to be tilted at an angle of, for example, 30 to 60° relative to the tire equator Co. In the present example of a motorcycle tire according to the present invention, the carcass 6 is formed by two carcass plies 6A and 6B. The carcass plies 6A and 6B are disposed with the carcass cords tilted in different orientations such that the carcass cords of one of the plies intersect with the carcass cords of the other ply.

Similar to the carcass 6, the breaker layer 7 is formed by a plurality of breaker plies in which breaker cords are arranged so as to be tilted at an angle of, for example, 30 to 60° relative to the tire equator Co. In the present example of a motorcycle tire according to the present invention, the breaker layer 7 is formed by two breaker plies 7A and 7B. The breaker layer 7 absorbs a shock from a projection on the road surface, or the like, thereby protecting the carcass 6.

The motorcycle tire 1 includes a tread rubber G2 forming the tread portion 2, and sidewall rubbers G3 forming the sidewall portions 3.

The tread rubber G2 is provided adjacently to the outer side in the tire radial direction of the carcass 6. In the present example of a motorcycle tire according to the present invention, the breaker layer 7 is interposed therebetween.

The sidewall rubbers G3 are provided adjacently to the outer sides in the tire axial direction of the carcass 6. The outer end in the tire radial direction of each sidewall rubber G3 is contiguous with the corresponding outer end in the tire axial direction of the tread rubber G2 with a boundary surface K interposed therebetween.

In the motorcycle tire 1 according to the present embodiment of the invention, a loss tangent $\tan\delta S$ at 70°C of the sidewall rubber G3 is set to be lower than a loss tangent $\tan\delta T$ at 70°C of the tread rubber G2.

Ordinarily, the temperature of a tire increases to about 70°C during running. Therefore, in the motorcycle tire 1 according to the present embodiment of the invention, the loss tangent $\tan\delta T$ of the tread rubber G2 is relatively high during running. Accordingly, excellent grip performance can be exhibited over the entire times of straight running and cornering. In addition, the loss tangent $\tan\delta T$ being high allows contribution to be made to improvement in anti-friction performance.

Meanwhile, the loss tangent $\tan\delta S$ of the sidewall rubber G3 is relatively low during running. Accordingly, a flexibly deforming property and excellent damping performance can be imparted to the sidewall portion 3.

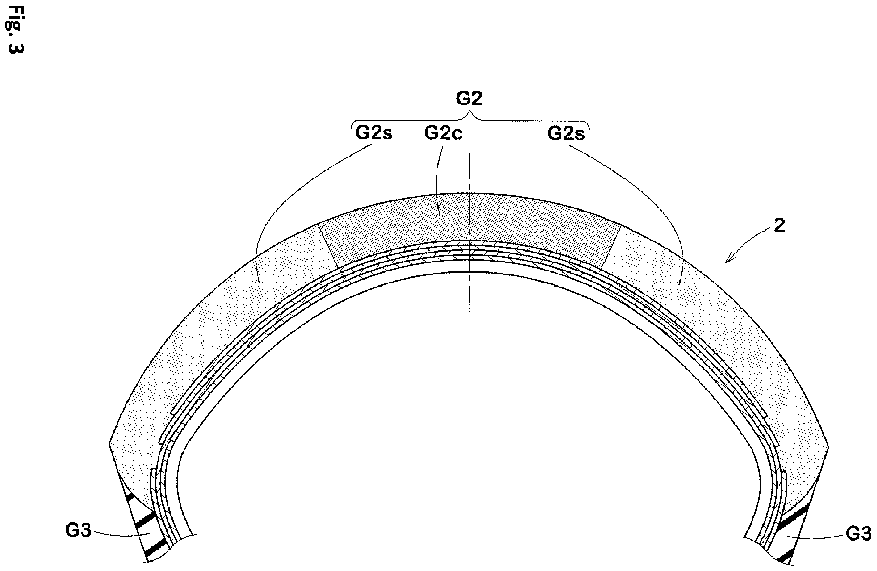

As shown in FIG. 3, in the tread portion 2, the tread rubber G2 is divided into three portions which are: a center rubber portion G2c on the side where the tire equator is present; and shoulder rubber portions G2s on both sides of the center rubber portion G2c. Rubbers different from each other in physical property can be used for the center rubber portion G2c and each shoulder rubber portion G2s. In this case, the loss tangent $\tan\delta S$ at 70°C of each sidewall rubber G3 is set to be lower than the loss tangent $\tan\delta T$ at 70°C of a rubber that is adjacent to the sidewall rubber G3, i.e., the rubber forming the corresponding shoulder rubber portion G2s.

Although the difference between the loss tangent $\tan\delta S$ and the loss tangent $\tan\delta T$ ($\tan\delta T - \tan\delta S$) is according to the present invention not particularly limited, the difference is preferably not less than 0.05 and more preferably not less than 0.10. If the difference ($\tan\delta T - \tan\delta S$) is less than 0.05, it becomes difficult to achieve both grip performance and damping performance at high levels.

Meanwhile, if the difference ($\tan\delta T - \tan\delta S$) is excessively great, the adhesiveness between each sidewall rubber G3 and the tread rubber G2 decreases, whereby a crack or separation tends to occur on the corresponding boundary surface K. In view of this, the present example of a motorcycle tire according to the present invention employs the following structure.

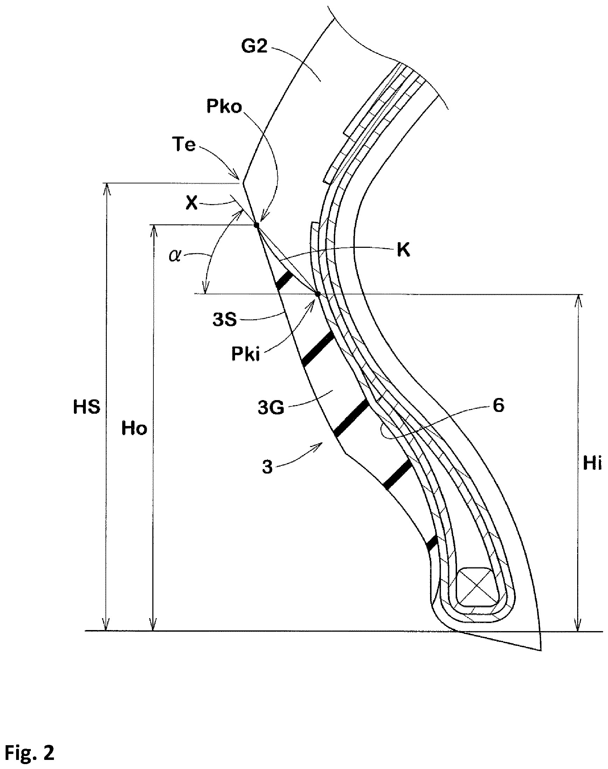

As shown in FIG. 2 in an enlarged manner, the outer end Pko in the tire axial direction of each boundary surface K is located on the outer surface 3S of the corresponding sidewall portion 3. The inner end Pki in the tire axial direction of the boundary surface K is located on the carcass 6. In the present example of a motorcycle tire according to the present invention, a case is described in which: the carcass 6 has a high turn-up structure; and each inner end Pki is located on the corresponding turned-up portion 6b of the carcass 6. However, the carcass 6 may have a low turn-up structure, and the inner end Pki may be located on the body portion 6a of the carcass 6.

The height Ho in the tire radial direction of each outer end Pko from a bead base line BL, and the height HS in the tire radial direction of the corresponding tread edge Te from the bead base line BL preferably satisfy the following expression (1).

$$HS > Ho > 0.6 \times HS \ ... \ (1)$$

If the height Ho is greater than the height HS (HS<Ho), a part of the sidewall rubber G3 is exposed on the tread surface 2s. Since the sidewall rubber G3 has a lower grip performance than the tread rubber G2, the grip performance decreases during cornering, or the grip performance changes in a transition period of cornering. Therefore, the stability in cornering tends to be impaired. If the height Ho is equal to the height HS (HS=Ho), the outer end Pko is exposed at the tread edge Te. Thus, the outer end Pko contacts the ground during cornering, whereby a crack or separation tends to occur on the boundary surface K, originating from the outer end Pko.

Contrariwise, if the height Ho is not greater than 0.6 times the height HS (Ho≤0.6×HS), the outer end Pko is located near an intermediate height position of the sidewall portion 3 at which great deformation occurs when a load is applied. Accordingly, stress is concentrated at the outer end Pko, whereby a crack or separation tends to occur on the boundary surface K, originating from the outer end Pko. Therefore, in accordance with the present invention expression (1) is preferably satisfied for the above-described reasons. Regarding the upper limit for the height Ho, the height Ho is more preferably not greater than 0.95 times the height HS. Regarding the lower limit for the height Ho, the height Ho is more preferably not less than 0.65 times the height HS.

In order to inhibit a crack or separation from occurring on the boundary surface K, it is in accordance with the present invention also preferable that, on the boundary surface K, the height Hi in the tire radial direction of the inner end Pki from the bead base line BL and the height Ho of the outer end Pko satisfy the following expression (2).

$$Ho > Hi \ ... \ (2)$$

In this case, the angle $\alpha$, relative to a line of the tire axial direction, of a straight line X passing the inner end Pki and the outer end Pko is preferably larger than 0°. In particular, the angle $\alpha$ is preferably not smaller than 5°, more preferably not smaller than 15°, and further preferably not smaller than 30°.

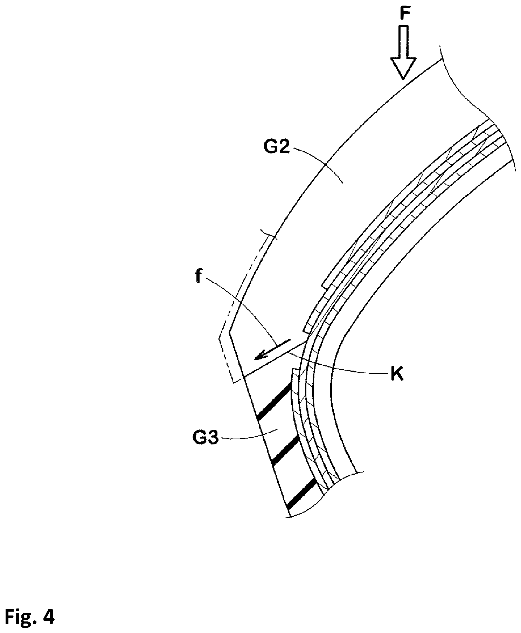

If the height Hi is not less than the height Ho (Ho≤Hi), the following drawback occurs. As shown in FIG. 4, when load F is applied to the tread portion 2, force f is exerted to the tread rubber G2 along the boundary surface K in an orientation of sliding outward in the tire axial direction. As a result, a crack or separation tends to occur on the boundary surface K. In the case of Ho>Hi, although force is exerted to the tread rubber G2 along the boundary surface K in an orientation of sliding inward in the tire axial direction, an internal pressure counteracts the force, and thus a crack or separation is inhibited from occurring.

Tires generate heat also by deformation thereof. Therefore, if the temperature dependencies regarding rubber physical properties are high, significant changes in performance occur depending on the running condition. In view of this, a peak temperature Ts of the loss tangent tanδS of the sidewall rubber G3 is preferably lower than a peak temperature Tt of the loss tangent tanδT of the tread rubber G2. If a peak temperature is further on the lowtemperature side, the slope at temperatures in a range for actual usage of the tire becomes gentle. This means that the temperature dependency of the sidewall rubber G3 is lower than that of the tread rubber G2. Accordingly, advantageous effects of suppressing heat generation due to repeated damping and maintaining effects of damping characteristics even at the occurrence of a change in temperature, are obtained.

In the motorcycle tire 1 in accordance with the present invention, it is also preferable that a complex elastic modulus $E^*_s$ at 70°C of the sidewall rubber G3 is lower than a complex elastic modulus $E^*_T$ at 70°C of the tread rubber G2. Accordingly, a more flexibly deforming property can be imparted to the sidewall portion 3, and ride comfort and steering stability can be improved. The difference between the complex elastic moduli ($E^*_T$-$E^*_S$) is preferably not less than 1.0 MPa and further preferably not less than 2.0 MPa. Regarding the upper limit for the difference ($E^*_T$-$E^*_S$), the difference ($E^*_T$-$E^*_S$) is preferably not greater than 15 MPa in order to inhibit a crack or separation from occurring on the boundary surface K.

Although the rubber surface of the tread portion 2 is gradually renewed owing to friction by running, the surface of the sidewall portion 3 is constantly exposed to the outside without being renewed. Therefore, the sidewall rubber G3 is required to have high weather resistance than the tread rubber G2. In view of this, in accordance with the present invention the amount of an antioxidant blended per 100 parts by weight of a rubber component in the sidewall rubber G3 is preferably larger than the amount of an antioxidant blended per 100 parts by weight of a rubber component in the tread rubber G2.

According to the present invention, the antioxidant is not particularly limited, and examples thereof include polymers of 2,2,4-trimethyl-1,2-dihydroquinoline, AW(6-ethoxy-1,2-dihydro-2,2,4-trimethylquinoline), high-temperature condensates of diphenylamine and acetone, 6C[N- (1,3-dimethylbutyl)-N'-phenyl-p-phenylenediamine], and 3C(N-isopropyl-N'-phenyl-p-phenylenediamine).

EXAMPLES

In order to verify the advantageous effects of the present invention, motorcycle tires (130/70-13M/C) having the structure shown in FIG. 1 were produced as test tires based on the specifications indicated in Table 1. The grip performance, the damping performance, the temperature dependency, and the crack resistance of each test tire were tested, and comparison was performed. Specifications other than those indicated in Table 1 are substantially the same among the test tires.

(1) Grip Performance

Each test tire was mounted to the rear wheel of a motorcycle (a scooter with an engine displacement of 125 cc) under conditions of a rim (MT3.5×13M/C) and an internal pressure (225 kPa), and the motorcycle was caused to run on a cornering course with a low μ road (road surface μ=0.45). Sensory evaluation was made by a professional rider regarding grip performance at the time of acceleration during the running, and the result was indicated as an index with the result of Comparative Example 1 being regarded as 100. A larger numerical value indicates better grip performance.

(2) Damping Performance

The above-described vehicle was caused to run and pass over a step having a height of 10 mm and provided on a curved road having a radius of 50 m. Sensory evaluation was made by a professional rider regarding damping performance at the time of the passing-over, and the result was indicated as an index with the result of Comparative Example 1 being regarded as 100. A larger numerical value indicates better damping performance.

(3) Temperature Dependency

The above-described test for damping performance was conducted in an initial running state where the tire was still cool and a state where the tire was warmed as a result of running performed for 30 minutes (equivalent to a load of 2.25 kN). Then, sensory evaluation was made by a professional rider regarding the amount of change in damping performance between the states, and the result was indicated as an index with the result of Comparative Example 1 being regarded as 100. A larger numerical value indicates lower temperature dependency and more stable damping performance.

(4) Crack Resistance

Each tire was left at rest for 21 days in an atmosphere with an ozone concentration of 50 pphm and a temperature (40°C) so that degradation of the tire was promoted. Then, running with the tire was performed on a drum for 10000 km under conditions of a rim (MT3.5×13M/C), an internal pressure (225 kPa), a load (3.9 kN), and a speed (60 km/h). Whether or not a crack has occurred in the surface of either of the sidewall portions, was checked through visual observation.

[Table 1]

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Loss tangent $\tan\delta T$ | 0.30 | 0.30 | 0.30 | 0.30 | 0.30 | 0.30 | 0.30 | 0.30 | 0.25 |
| Loss tangent $\tan\delta$ S | 0.20 | 0.20 | 0.20 | 0.20 | 0.25 | 0.20 | 0.30 | 0.35 | 0.30 |
| Height Ho (mm) | 45 | 30 | 45 | 45 | 45 | 33 | - | 45 | 45 |
| Height Hi (mm) | 33 | 25 | 43 | 33 | 33 | 45 | - | 33 | 33 |
| Ratio Ho/HS | 0.9 | 0.6 | 0.9 | 0.9 | 0.9 | 0.67 | - | 0.9 | 0.9 |
| Peak temperature Tt (°C) | -25 | -25 | -25 | -25 | -25 | -25 | -25 | -25 | -30 |
| Peak temperature Ts (°C) | -45 | -25 | -25 | -30 | -45 | -45 | -25 | -20 | -25 |
| Complex elastic modulus $E^*_T$ (MPa) | 6.0 | 6.0 | 6.0 | 6.0 | 6.0 | 6.0 | 6.0 | 6.0 | 6.0 |
| Complex elastic modulus $E^*s$ (MPa) | 3.0 | 3.0 | 3.0 | 3.0 | 4.0 | 3.0 | 6.0 | 6.0 | 6.0 |
| Amount of contained antioxidant | | | | | | | | | |
| · Tread rubber | 0.6 | 0.6 | 0.6 | 0.6 | 0.6 | 0.6 | 0.6 | 0.6 | 0.6 |
| · Sidewall rubber | 1.0 | 1.0 | 1.0 | 1.0 | 1.0 | 1.0 | 0.6 | 0.6 | 0.6 |
| Grip performance | 110 | 103 | 105 | 110 | 105 | 105 | 100 | 95 | 80 |
| Damping performance | 120 | 110 | 115 | 120 | 105 | 110 | 100 | 80 | 85 |
| Temperature dependency | 110 | 100 | 100 | 105 | 110 | 110 | 100 | 90 | 100 |
| Crack resistance | No crack | No crack | No crack | No crack | No crack | Large crack | Small crack | Small crack | Small crack |

It can be verified that, as indicated in the table, both grip performance and damping performance are achieved at high levels in the tires of the examples.

**Claims**

1. A motorcycle tire (1) in which a carcass (6) extends from a tread portion (2) through sidewall portions (3) to bead portions (4), and an outer surface of the tread portion (2) extends from a tire equator (Co) to tread edges (Te) so as to be curved in an arc-shaped manner to protrude radially outwardly, the motorcycle tire (1) comprising:

   a tread rubber (G2) forming the tread portion (2); and
   sidewall rubbers (G3) forming the sidewall portions (3) and contiguous with the tread rubber (G2) with boundary surfaces (K) interposed therebetween, wherein
   a loss tangent $\tan\delta S$ at 70°C of each sidewall rubber (G3) is lower than a loss tangent $\tan\delta T$ at 70°C of the tread rubber (G2), wherein
   the loss tangent $\tan\delta S$ and the loss tangent $\tan\delta T$ at 70°C are values measured according to the standards of JIS-K 6394 using a "viscoelastic spectrometer" under conditions that the measurement temperature is 70°C, the initial strain is 10%, the amplitude is ±1%, the frequency is 10 Hz, and the deformation mode is tension.

2. The motorcycle tire (1) according to claim 1, wherein the carcass (6) has a bias structure.

3. The motorcycle tire (1) according to claim 1 or 2, wherein

   an outer end (Pko) in a tire axial direction of each boundary surface (K) is located on an outer surface (3S) of the corresponding sidewall portion (3), and
   a height Ho in a tire radial direction of each outer end (Pko) from a bead base line (BL) and a height HS in the tire radial direction of the corresponding tread edge (Te) from the bead base line (BL) satisfy the following expression (1).

$$HS > Ho > 0.6 \times HS \ ... \ (1)$$

4. The motorcycle tire (1) according to any one of claims 1 to 3, wherein

   an outer end (Pko) in a tire axial direction of each boundary surface (K) is located on an outer surface (3S) of the corresponding sidewall portion (3),
   an inner end (Pki) in the tire axial direction of the boundary surface (K) is located on the carcass (6), and
   a height Ho in a tire radial direction of the outer end (Pko) from a bead base line (BL) and a height Hi in the tire radial direction of the inner end (Pki) from the bead base line (BL) satisfy the following expression (2).

$$Ho > Hi \ ... \ (2)$$

5. The motorcycle tire (1) according to claim 4, wherein an angle $\alpha$, relative to a line of the tire axial direction, of a straight line (X) passing the inner end (Pki) and the outer end (Pko) of the boundary surface (K) is not smaller than 5°.

6. The motorcycle tire (1) according to any one of claims 1 to 5, wherein a peak temperature Ts of the loss tangent $\tan\delta S$ of the sidewall rubber (G3) is lower than a peak temperature Tt of the loss tangent $\tan\delta T$ of the tread rubber (G2), wherein
   the peak temperature of the loss tangent $\tan\delta$ is obtained from the result of the measurement of the $\tan\delta$, the $\tan\delta$ is measured according to the standards of JIS-K 6394 under conditions that the measurement temperature is -120 to 80°C, the initial strain is 10%, the amplitude is ±1%, the frequency is 10 Hz, and the deformation mode is tension.

7. The motorcycle tire (1) according to any one of claims 1 to 6, wherein a complex elastic modulus $E^*_s$ at 70°C of the sidewall rubber (G3) is lower than a complex elastic modulus $E^*_T$ at 70°C of the tread rubber (G2), wherein
   the complex elastic modulus $E^*s$ at 70°C and $E^*_T$ at 70°C are values measured according to the standards of JIS-K 6394 using a "viscoelastic spectrometer" under conditions that the measurement temperature is 70°C, the initial strain is 10%, the amplitude is ±1%, the frequency is 10 Hz, and the deformation mode is tension.

8. The motorcycle tire (1) according to any one of claims 1 to 7, wherein

   each of the sidewall rubber (G3) and the tread rubber (G2) contains an antioxidant, and
   an amount of the antioxidant blended per 100 parts by weight of a rubber component in the sidewall rubber
   (G3) is larger than an amount of the antioxidant blended per 100 parts by weight of a rubber component in the
   tread rubber (G2).

**Patentansprüche**

1. Motorradreifen (1), in dem eine Karkasse (6) sich von einem Laufstreifenabschnitt (2) durch Seitenwandabschnitte (3) zu Wulstabschnitten (4) erstreckt, und eine äußere Oberfläche des Laufstreifenabschnitts (2) sich von einem Reifenäquator (Co) zu Laufstreifenkanten (Te) erstreckt, so dass sie auf bogenförmige Weise gewölbt ist, um radial nach außen hervorzustehen, wobei der Motorradreifen (1) umfasst:

   einen Laufstreifenkautschuk (G2), der den Laufstreifenabschnitt (2) bildet; und
   Seitenwandkautschuke (G3), welche die Seitenwandabschnitte (3) bilden und an dem Laufstreifenkautschuk (G2) angrenzen, mit dazwischen befindlichen Grenzoberflächen (K), wobei
   ein Verlusttangens $\tan\delta S$ bei 70°C jedes Seitenwandkautschuks (G3) niedriger ist als ein Verlusttangens $\tan\delta T$ bei 70°C des Laufstreifenkautschuks (G2), wobei
   der Verlusttangens $\tan\delta S$ und der Verlusttangens $\tan\delta T$ bei 70°C Werte sind, die gemäß den Normen von JIS-K 6394 unter Verwendung eines "Viskoelastizitätsspektrometers" unter den Bedingungen gemessen ist, dass die Messtemperatur 70°C ist, die Anfangsdehnung 10% ist, die Amplitude $\pm1\%$ ist, die Frequenz 10 Hz ist und der Verformungsmodus Spannung ist.

2. Motorradreifen (1) nach Anspruch 1, wobei die Karkasse (6) eine Diagonalstruktur aufweist.

3. Motorradreifen (1) nach Anspruch 1 oder 2, wobei

   ein in einer Reifen-Axialrichtung äußeres Ende (Pko) jeder Grenzoberfläche (K) an einer äußeren Oberfläche (3S) des entsprechenden Seitenwandabschnitts (3) liegt, und
   eine Höhe Ho jedes äußeren Endes (Pko) von einer Wulst-Grundlinie (BL) in einer Reifen-Radialrichtung und eine Höhe HS der entsprechenden Laufstreifenkante (Te) von der Wulst-Grundlinie (BL) in der Reifen-Radialrichtung dem folgenden Ausdruck (1) genügen.

$$HS>Ho>0{,}6\times HS \quad (1)$$

4. Motorradreifen (1) nach einem der Ansprüche 1 bis 3, wobei

   ein in einer Reifen-Axialrichtung äußeres Ende (Pko) jeder Grenzoberfläche (K) an einer äußeren Oberfläche (3S) des entsprechenden Seitenwandabschnitts (3) liegt,
   ein in der Reifenaxialrichtung inneres Ende (Pki) der Grenzoberfläche (K) auf der Karkasse (6) liegt, und
   eine Höhe Ho des äußeren Endes (Pko) von einer Wulst-Grundlinie (BL) in einer Reifen-Radialrichtung und eine Höhe Hi des inneren Endes (Pki) von der Wulst-Grundlinie (BL) in der Reifen-Radialrichtung dem folgenden Ausdruck (2) genügen.

$$Ho>Hi \quad (2)$$

5. Motorradreifen (1) nach Anspruch 4, wobei ein Winkel $\alpha$ einer durch das innere Ende (Pki) und das äußere Ende (Pko) der Grenzoberfläche (K) verlaufenden Geraden (X), relativ zu einer Linie der Reifen-Axialrichtung, nicht kleiner als 5° ist.

6. Motorradreifen (1) nach einem der Ansprüche 1 bis 5, wobei eine Spitzentemperatur Ts des Verlusttangens $\tan\delta S$ des Seitenwandkautschuks (G3) niedriger ist als eine Spitzentemperatur Tt des Verlusttangens $\tan\delta T$ des Lauf-streifenkautschuks (G2), wobei
   die Spitzentemperatur des Verlusttangens $\tan\delta$ aus dem Ergebnis der Messung des $\tan\delta$ erhalten ist, der $\tan\delta$

gemäß den Normen von JIS-K 6394 unter den Bedingungen gemessen ist, dass die Messtemperatur -120 bis 80°C ist, die Anfangsdehnung 10% ist, die Amplitude ±1%, die Frequenz 10 Hz ist, und der Verformungsmodus Spannung ist.

7. Motorradreifen (1) nach einem der Ansprüche 1 bis 6, wobei ein komplexer Elastizitätsmodul $E^*_S$ bei 70°C des Seitenwandkautschuks (G3) niedriger ist als ein komplexer Elastizitätsmodul $E^*_T$ bei 70°C des Laufstreifenkautschuks (G2), wobei
der komplexe Elastizitätsmodul $E^*_S$ bei 70°C und $E^*_T$ bei 70°C Werte sind, die gemäß den Normen von JIS-K 6394 unter Verwendung eines "Viskoelastizitätsspektrometers" unter den Bedingungen gemessen ist, dass die Messtemperatur 70°C ist, die Anfangsdehnung 10% ist, die Amplitude ±1% ist, die Frequenz 10 Hz ist, und der Verformungsmodus Spannung ist.

8. Motorradreifen (1) nach einem der Ansprüche 1 bis 7, wobei

jeder von dem Seitenwandkautschuk (G3) und dem Laufstreifenkautschuk (G2) ein Antioxidans enthält, und eine Menge des beigemischten Antioxidans pro 100 Gewichtsteile einer Kautschukkomponente in dem Seitenwandkautschuk (G3) größer ist als eine Menge des beigemischten Antioxidans pro 100 Gewichtsteile einer Kautschukkomponente in dem Laufstreifenkautschuk (G2).

## Revendications

1. Pneumatique de motocyclette (1) dans lequel une carcasse (6) s'étend d'une partie de bande de roulement (2) à travers des parties de paroi latérale (3) jusqu'à des parties de bille (4) et une surface externe de la partie de bande de roulement (2) s'étend d'un équateur de pneumatique (Co) à des bords de bande de roulement (Te) de manière à être incurvée d'une manière en forme d'arc pour faire saillie radialement vers l'extérieur, le pneumatique de motocyclette comprenant :

un caoutchouc de bande de roulement (G2) formant la partie de bande de roulement (2) ; et des caoutchoucs de paroi latérale (G3) formant les parties de paroi latérale (3) et contigus avec le caoutchouc de bande de roulement (G2) avec des surfaces de limite (K) interposées entre eux, une tangente de perte tanδS à 70 °C de chaque caoutchouc de paroi latérale (G3) étant inférieure à une tangente de perte tanδT à 70 °C du caoutchouc de la bande de roulement (G2), la tangente de perte tanδS et la tangente de perte tanδT à 70 °C étant des valeurs mesurées selon les normes de JIS-K 6394 en utilisant un « spectromètre viscoélastique » dans des conditions où la température de mesure est de 70 °C, la contrainte initiale est de 10 %, l'amplitude est de ± 1 %, la fréquence est de 10 Hz et le mode de déformation est la tension.

2. Pneumatique de motocyclette selon la revendication 1, dans lequel la carcasse (6) a une structure en biais.

3. Pneumatique de motocyclette selon la revendication 1 ou 2, dans lequel

une extrémité externe (Pko) dans une direction axiale de pneumatique de chaque surface de limite (K) est située sur une surface externe (3S) de la partie de paroi latérale correspondante (3) et une hauteur (Ho) dans une direction radiale de pneumatique de chaque extrémité externe (Pko) d'une ligne de base de bille (BL) et une hauteur HS dans une direction radiale de pneumatique du bord de bande de roulement correspondant (Te) de la ligne de base de bille (BL) satisfont l'expression suivante (1)

$$HS > Ho > 0{,}6 \times HS \qquad (1).$$

4. Pneumatique de motocyclette selon l'une quelconque des revendications 1 à 3, dans lequel

une extrémité externe (Pko) dans une direction axiale de pneumatique de chaque surface de limite (K) est située sur une surface externe (3S) de la partie de paroi latérale correspondante (3), une extrémité interne (Pki) dans la direction axiale de pneumatique de la surface de limite (K) est située sur la carcasse (6) et une hauteur Ho dans une direction axiale de pneumatique de l'extrémité externe (Pko) d'une ligne de base de bille (BL) et une hauteur (Hi) dans la direction radiale de l'extrémité interne (Pki) de la ligne de base (BL) satisfont l'expression suivante (2)

$$Ho > Hi \qquad (2).$$

5. Pneumatique de motocyclette selon la revendication 4, dans lequel un angle $\alpha$, par rapport à une ligne de la direction axiale de pneumatique, d'une ligne droite (X) passant l'extrémité interne (Pki) et l'extrémité externe (Pko) de la surface de limite (K) est de pas moins de 5°.

6. Pneumatique de motocyclette (1) selon l'une quelconque des revendications 1 à 5, dans lequel une température de pic Ts de la tangente de perte tan$\delta$S du caoutchouc de paroi latérale (G3) est inférieure à une température de pic Tt de la tangente de perte tan$\delta$T du caoutchouc de bande de roulement (G2), la température de pic de la tangente de perte tan$\delta$ étant obtenue à partir du résultat de la mesure de la tan$\delta$, la tan$\delta$ étant mesurée selon les normes de JIS-K 6394 dans des conditions où la température de mesure est de -120 à 80 °C, la contrainte initiale est de 10 %, l'amplitude est de ± 1 %, la fréquence est de 10 Hz et le mode de déformation est la tension.

7. Pneumatique de motocyclette (1) selon l'une quelconque des revendications 1 à 6, dans lequel un module élastique complexe E*$_S$ à 70 °C du caoutchouc de paroi latérale (G3) est inférieur à un module élastique complexe E*$_T$ à 70 °C du caoutchouc de bande de roulement (G2),
les modules élastiques complexes E*$_S$ à 70 °C et E*$_T$ à 70 °C étant des valeurs mesurées selon les normes de JIS-K 6394 en utilisant un « spectromètre viscoélastique » dans des conditions où la température de mesure est de 70 °C, la contrainte initiale est de 10 %, l'amplitude est de ± 1 %, la fréquence est de 10 Hz et le mode de déformation est la tension.

8. Pneumatique de motocyclette (1) selon l'une quelconque des revendications 1 à 7, dans lequel

chacun du caoutchouc de paroi latérale (G3) et du caoutchouc de bande de roulement (G2) contient un antioxydant et
une quantité de l'antioxydant mélangé par 100 parties en poids d'un composant de caoutchouc dans le caoutchouc de paroi latérale (G3) est plus grande qu'une quantité de l'antioxydant mélangé par 100 parties en poids d'un composant de caoutchouc dans le caoutchouc de bande de roulement (G2).

**Fig. 1**

**Fig. 2**

Fig. 3

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017204236 A
- WO 2019244912 A1
- EP 2154006 A1